Europäisches Patentamt

European Patent Office

Office européen des brevets

(11) Veröffentlichungsnummer: **0 229 244**
**A2**

## (12) EUROPÄISCHE PATENTANMELDUNG

(21) Anmeldenummer: 86114940.9

(22) Anmeldetag: 28.10.86

(51) Int. Cl.4: **B23P 21/00**

(30) Priorität: 16.01.86 CH 138/86

(43) Veröffentlichungstag der Anmeldung:
**22.07.87 Patentblatt  87/30**

(84) Benannte Vertragsstaaten:
**BE CH DE FR IT LI SE**

(71) Anmelder: **LGZ LANDIS & GYR ZUG AG**

**CH-6301 Zug(CH)**

(72) Erfinder: **von Burg, Peter**
**Grütlistrasse 13**
**CH-8840 Einsiedeln(CH)**

(54) **Montagezelle.**

(57) Die Montagezelle (3) besteht aus einer Fördereinrichtung (5) mit Paletten (4), einem Handhabungsgerät (11), einem Drehtisch (12) und weiteren Geräten (15). Das Handhabungsgerät (11) befördert eine Vielzahl gleicher Werkstücke von einer Palette (4) auf den Drehtisch (12) und legt das montierte Produkt zurück auf die Palette (4). Die weiteren Geräte (15) führen Zusatzoperationen aus, für die das Handhabungsgerät (11) nicht geeignet ist.

EP 0 229 244 A2

## Montagezelle

Die Erfindung bezieht sich auf eine Montagezelle der im Oberbegriff des Anspruchs 1 genannten Art.

Es ist eine Montagezelle dieser Art bekannt - (Assembly Automation May 1985, S. 103 -109), bei der eine Vielzahl von Paletten mittels einer Fördereinrichtung entlang einer geradlinigen Bahn transportiert werden. Jede Palette wird dann maschinell auf einen Drehtisch geladen, während eine andere Palette dem Drehtisch entnommen wird. Im Zentrum des Drehtisches ist ein programmierbares Handhabungsgerät (Roboter) angeordnet und an der Peripherie des Drehtisches befinden sich Wendelvibratoren. Mit 24 Paletten und vier Werkstücken auf jeder Palette können mit Hilfe des Handhabungsgerätes in einer Umdrehung des Drehtisches 96 Operationen durchgeführt werden.

Der Erfindung liegt die Aufgabe zugrunde, eine Montagezelle der eingangs genannten Art zu - schaffen, die kein Beladen des Drehtisches mit Paletten erfordert; ferner sollen die durch Greiferwechsel bedingten Verlustzeiten minimal sein und die Montageleistung soll in weiten Grenzen variiert werden können.

Die Lösung dieser Aufgabe gelingt durch die im Kennzeichen des Patentanspruchs 1 genannten Merkmale.

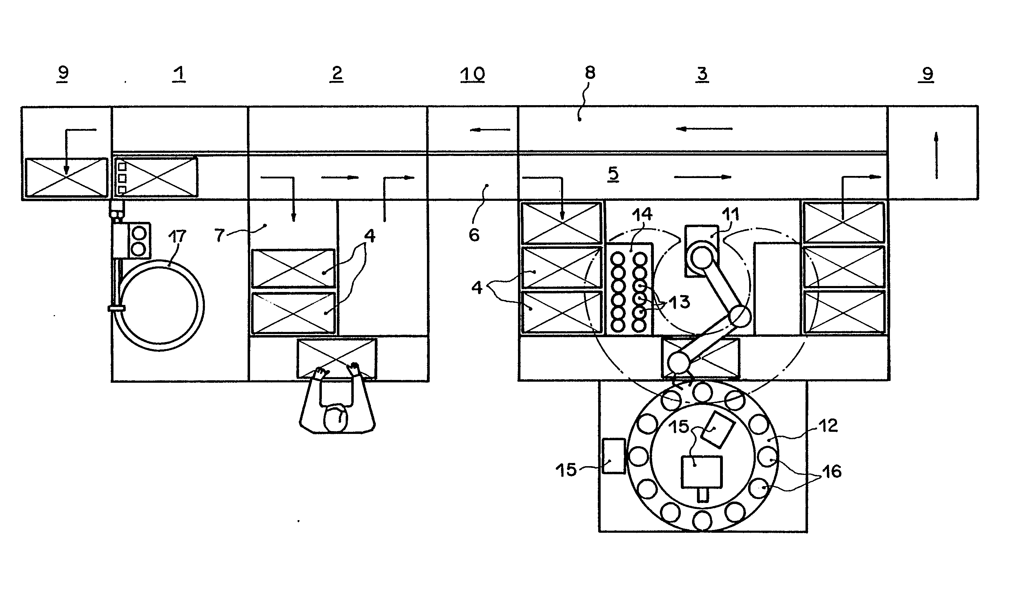

Nachfolgend wird ein Ausführungsbeispiel der Erfindung anhand der Zeichnung näher erläutert, die eine Montageanlage in der Draufsicht darstellt.

In der einzigen Zeichnungsfigur bedeuten 1 und 2 Versorgungsmoduln und 3 eine oder mehrere Montagezellen. Die Versorgungsmoduln 1 und 2 dienen dazu, die einzelnen Werkstücke (Teile) eines Produktes in montagerichtiger Lage auf Paletten 4 zu legen. In der Montagezelle 3 werden die Werkstücke zu einem Produkt montiert. Mit Hilfe einer Fördereinrichtung 5, die in bekannter Weise aus Förderbändern, Transportrollen, Mitnehmern, Stop-und Zentriervorrichtungen usw. bestehen kann, werden die Paletten 4, wie in der Zeichnung durch Pfeile angedeutet, auf einer Versorgungsstrasse 6 von den Versorgungsmoduln 1, 2 zur Montagezelle 3 transportiert, zum Beladen und Entladen in Querstrassen 7 abgelenkt, an geeigneter Stelle angehalten und schliesslich auf einer Entsorgungsstrasse 8 zurücktransportiert. Die Versorgungsmoduln 1, 2 und eine oder mehrere Montagezellen 3 sind baukastenartig zusammenfügbar. Querschiebemoduln 9 verbinden am Anfang und Ende der Montageanlage die Versorgungsstrasse 6 mit der Entsorgungsstrasse 8, während ein oder mehrere Zwischenmoduln 10 den räumlichen Abstand zwischen den einzelnen Moduln bzw. Zellen vergrössern und eine zusätzliche Pufferzone - schaffen.

Die auch für einen autonomen Betrieb geeignete Montagezelle 3 besteht aus dem zugehörigen Teil der Fördereinrichtung 5, einem programmierbaren flexiblen Handhabungsgerät 11, einem Drehtisch 12 und einer nicht gezeichneten Steuereinrichtung, welche die Fördereinrichtung 5, das Handhabungsgerät 11 sowie den Drehtisch 12 und damit auch den Bewegungablauf der Paletten 4 und der zu montierenden Werkstücke steuert. Das Handhabungsgerät 11 weist eine Greiferwechseleinrichtung auf; verschiedene Greifer 13 sind in einem Greiferträger 14 abgelegt. Der Aktionsbereich des Handhabungsgerätes 11, das z.B. ein Industrieroboter des Typs Scara sein kann, ist in der Zeichnung durch eine gestrichelte Linie angedeutet.

Im Aktionsbereich des Handhabungsgerätes 11 befindet sich der Drehtisch 12, der vorzugsweise kreisringförmig ausgebildet ist, so dass nicht nur an der Peripherie des Drehtisches 12, sondern auch in dessen inneren Bereich weitere Geräte 15 angeordnet werden können. Das Handhabungsgerät 11 ist deshalb ausserhalb des Drehtisches 12 aufgestellt. Auf dem Drehtisch 12 sind in gleichen Teilungsabständen n Werkstückträger 16 angeordnet; im dargestellten Beispiel ist n = 12. Die Geräte 15 sind vorzugsweise nicht flexible Handhabungsgeräte, sondern Spezialgeräte. Sie werden ebenfalls von der Steuereinrichtung gesteuert und dienen, wie weiter unten noch erläutert wird, zur Durchführung von Zusatzoperationen.

Die Versorgungsmoduln 1, 2 sind je nach Bedarf mit Wendelvibratoren 17, Magazinen, Transportbändern, Behältern, Einlegegeräten usw. ausgerüstet. Werkstücke, die nicht maschinell zugeführt werden können, werden manuell auf die Paletten 4 gelegt. Die Paletten 4 haben die Aufgabe, die Werk stücke (Montageteile) eines Produktes geordnet und lagerichtig in die Montagezelle 3 zu bringen. Jede Palette 4 trägt die Werkstücke eines Produktes in n-facher Anzahl oder ein Mehrfaches davon. Zudem übernehmen die Paletten 4 auch eine Pufferfunktion und dienen der Entsorgung.

Auf der Versorgungsstrasse 8 wird über eine Pufferstrecke jeweils eine bestückte Palette 4 in eine für das Handhabungsgerät 11 griffgünstige Position gebracht. Die Steuereinrichtung steuert nun das Handhabungsgerät 11 und den Drehtisch 12 so, dass während einer ersten schrittweisen Umdrehung des Drehtisches 12 das Handhabungsgerät 11 der Palette 4 n gleiche Werkstücke einer ersten Sorte entnimmt und diese Werkstücke auf den n Werkstückträgern 16 des Drehtisches 12 ablegt. Ist danach für die nächsten n oder x.n Werkstücke (x = ganze Zahl) ein anderer Greifer 13 erforderlich, so wird ein automatischer Greiferwechsel vorgenommen. Bei der nächsten - schrittweisen Umdrehung entnimmt das Handhabungsgerät 11 der Palette wiederum n gleiche Werkstücke, die ebenfalls von der ersten Sorte oder von einer anderen Sorte sein können, und fügt jedes dieser Werkstücke an eines der auf dem Drehtisch 12 schon vorhandenen Werkstücke oder Zwischenprodukte an. Dieser Vorgang wiederholt sich, bis die Montage des Produktes beendet ist. Während einer letzten Umdrehung des Drehtisches 12 transportiert das Handhabungsgerät 11 die fertig montierten Produkte vom Drehtisch 12 in die Palette 4 zurück.

Bei der Montage eines Produktes sind in der Regel wichtige Operationen durchzuführen, die das flexible Handhabungsgerät 11 nicht ausführen kann oder wofür es schlecht geeignet ist, z.B. Einpressen, Biegen, Nieten, Verstemmen, Taumeln, Schrauben, Bedrucken, Fetten, Kleben, Durchführung von Operationen von unten, Funktionsprüfung usw. Durch die beschriebene Anordnung des Drehtisches 12 und der Geräte 15 können in jedem beliebigen Montageschritt an den auf dem Drehtisch 12 befindlichen Werkstücken bzw. Zwischenprodukten solche Zusatzoperationen durchgeführt werden.

Die Vorteile der beschriebenen Montagezelle lassen sich nun leicht erkennen. Obschon im Gegensatz zu bekannten Anordnungen kein Beladen des Drehtisches 12 mit Paletten 4 erforderlich ist, sind die durch Greiferwechsel des Handhabungsgerätes 11 bedingten Verlustzeiten auf ein Minimum reduziert. Durch das Zusammenwirken der Geräte 15 und des Drehtisches 12 ist es möglich, auf einfache Weise Zusatzoperationen in die Montagefolge einzufügen, zusätzliche Montageleistung zu erbringen und damit die Leistung der Montagezelle 3 in weiten Grenzen den jeweiligen Anforderungen anzupassen. Die Montagezelle 3 kann autonom betrieben oder auch als Verkettungsmodul in einer Transferanlage, die mehrere Montagezellen aufweist, eingesetzt werden. Durch das Anfügen oder Weglassen von gleichen Zellen ergibt sich eine sehr hohe Leistungsanpassung. Ferner gestattet die beschriebene Montagezelle die Montage von Produktevarianten der gleichen Familie. Durch geeignete Ausbildung der Steuereinrichtung kann sogar dafür gesorgt werden, dass in der Montagezelle 3 die auf einer zugeführten Palette 4 vorhandenen Werkstücke maschinell identifiziert werden und die Montagezelle entsprechend der Art der erkannten Werkstücke ein vorbestimmtes Handhabungsprogramm ausführt.

**Ansprüche**

1. Montagezelle mit einer Fördereinrichtung für Paletten, mit einem programmierbaren Handhabungsgerät, das eine Greiferwechseleinrichtung aufweist, mit einem Drehtisch und mit einer Steuereinrichtung, dadurch gekennzeichnet, dass die Fördereinrichtung (5), das Handhabungsgerät und der Drehtisch (12) durch die Steuereinrichtung derart steuerbar sind, dass das Handhabungsgerät (11)
-während einer ersten Umdrehung des Drehtisches (12) einer Palette (4) nacheinander eine Vielzahl erster Werkstücke entnimmt und den Drehtisch - (12) mit ihnen belädt,
-während mindestens einer weiteren Umdrehung des Drehtisches (12) der Palette (4) eine Vielzahl zweiter bzw. weiterer Werkstücke entnimmt und auf dem Drehtisch (12) an jedes erste Werkstück bzw. an jedes aus mehreren Werkstücken bestehende Zwischenprodukt ein zweites bzw. weiteres Werkstück anfügt und schliesslich
-während einer letzten Umdrehung des Drehtisches (12) die montierten Produkte vom Drehtisch in die Palette lädt,
und dass im Bereich des Drehtisches (12) weitere von der Steuereinrichtung gesteuerte Geräte (15) angeordnet sind, um an den auf dem Drehtisch - (12) befindlichen Werkstücken bzw. Zwischenprodukten zusätzliche Operationen auszuführen.

2. Montagezelle nach Patentanspruch 1, dadurch gekennzeichnet, dass die Steuereinrichtung derart ausgebildet ist, dass das Handhabungsgerät (11) und/oder die weiteren Geräte (15) in Abhängigkeit von der Art der auf einer Palette (4) vorhandenen Werkstücke ein vorbestimmtes Handhabungsprogramm ausführen.

3. Montageanlage mit mindestens einer Montagezelle (3) nach Patentanspruch 1 oder 2.

4. Montaganlage nach Patentanspruch 3, gekennzeichnet durch mindestens ein Versorgungsmodul (1; 2) zum maschinellen und/oder manuellen Beladen der Paletten (4) mit Werkstücken in montagerichtiger Lage.

5. Montageanlage nach Patentanspruch 4, dadurch gekennzeichnet, dass Montagezelle(n) (3) und Versorgungsmodul(n) (1; 2) baukastenartig zusammenfügbar sind.

9    1    2    10    8    3    9

0 229 244